(19) Europäisches Patentamt
European Patent Office
Office européen des brevets

(11) Veröffentlichungsnummer : **0 446 464 B1**

(12) **EUROPÄISCHE PATENTSCHRIFT**

(45) Veröffentlichungstag der Patentschrift :
**01.12.93 Patentblatt 93/48**

(51) Int. Cl.$^5$ : **A01M 1/02, A01N 25/34**

(21) Anmeldenummer : **90124508.4**

(22) Anmeldetag : **18.12.90**

(54) **Köder für Stubenfliegen.**

(30) Priorität : **15.03.90 DE 4008260**

(43) Veröffentlichungstag der Anmeldung :
**18.09.91 Patentblatt 91/38**

(45) Bekanntmachung des Hinweises auf die
Patenterteilung :
**01.12.93 Patentblatt 93/48**

(84) Benannte Vertragsstaaten :
**BE CH DE DK ES FR GB GR IT LI NL**

(56) Entgegenhaltungen :
**EP-A- 0 229 191**
**DE-U- 8 915 080**
**FR-A- 2 143 723**
**FR-A- 2 423 157**
**GB-A- 2 005 539**
**GB-A- 2 005 540**
**JP-A-56 115 706**

(73) Patentinhaber : **BAYER AG**
**D-51368 Leverkusen (DE)**

(72) Erfinder : **Bertram, Heinz-Jürgen, Dr.**
**Nesselroder Strasse 27**
**W-5300 Bonn (DE)**
Erfinder : **Claussen, Uwe, Dr.**
**Am Wasserturm 15b**
**W-5090 Leverkusen 3 (DE)**
Erfinder : **Krüger, Bernd-Wieland, Dr.**
**Unterboschbach 19**
**W-5060 Bergisch Gladbach 2 (DE)**
Erfinder : **Nentwig, Günther, Dr.**
**Haferkamp 10**
**W-5000 Köln 80 (DE)**

## Beschreibung

Die Erfindung betrifft einen Köder für Stubenfliegen, bestehend aus einem mit einer insektizidhaltigen Ködersubstanz versehenen Körper in einer roten Lockfarbe.

Es ist eine in der Literatur bereits häufiger untersuchte Frage, ob sich die Lockwirkung von Köderflächen für Stubenfliegen (Musca domestica) durch bestimmte Formen und Farben steigern läßt. Bei der Untersuchung von Farben wurden sowohl die Helligkeiten als auch die Nuancen variiert. Während bei den Helligkeiten eine ausreichende Übereinstimmung dahingehend gefunden wurde, daß sie von erheblichem Einfluß sind, sind die Ergebnisse hinsichtlich der Nuancen sehr widersprüchlich. In der Literatur wird jede bunte und unbunte Hauptfarbe als besonders wirksam genannt. In der neueren Literatur werden nun übereinstimmend gelbe Köder als besonders attraktiv beschrieben, so z.B. von Burg und Axtell (Environ. Entomol., 13, 1083-1090 (1984)) für Musca domestica. Typisch für die Bewertung einer Farbe ist die Angabe einer Reihenfolge, beispielsweise bei Khan (Angew. Parasitol. 19, 187-188 (1978)) oder Groth (Angew. Parasitol. 13, 100-106 (1971)), die man durch Auslegen farbiger Karten und Auszählen der sich auf ihnen niederlassenden Fliegen erhält. Hecht (Bull. Entomol. Soc. of America, 16, 94-98 (1970)) kam in einer Zusammenfassung des Standes der Technik zu dem Ergebnis, daß die Präferenzen überwiegend von der Umgebungshelligkeit bestimmt werden. Es ist also weniger die Nuance als die relative Differenz der Helligkeiten, die von der Stubenfliege wahrgenommen wird Künast (Der prakt. Schädlingsbekämpfer, 32, 142-144 (1980)) folgert in einer Zusammenfassung von Arbeiten über die Wirkung von Farben auf das Verhalten von Stubenfliegen, daß die "stark von den Außenbedingungen abhängige Reaktionsbreite der Stubenfliege gegenüber Farben den gezielten Einsatz bei der Fliegenkontrolle problematisch macht". Einige biologische Ursachen dafür werden in der Arbeit von Hecht diskutiert.

Die Bewertung der Versuchsergebnisse erschwert, daß in den Arbeiten die Farben äußerst unpräzise beschrieben sind, obgleich seit längerem ausgezeichnete farbmetrische Methoden zur Verfügung stehen. Die Farbbezeichnungen sind immer subjektiv, und häufig werden die Oberflächenstrukturen der Prüfkörper oder die Umgebungshelligkeit in die Bewertung miteinbezogen. Da diese Faktoren die Farbempfindung sehr stark beeinflussen, ist es vollends schwierig, aus der subjektiven Farbempfindung des Beobachters, die mit Sicherheit von der einer Fliege verschieden ist, auf das Verhalten von Fliegen zu schließen Es ist daher die Konfusion in der Literatur nicht verwunderlich, weil mit dem Begriff der Farbe nicht nur die exakt meßbare, spektrale Verteilung des Gesichtsfeldes, sondern auch der von Erfahrung, Empfindung und anderen physiologischen Reizen beeinflußte Teil der Farbempfindung verbunden wurde.

Eine besonders leicht verständliche und anschauliche Farbmeßmethode ist das internationale Cielab-System, das der DIN 6174 zugrunde liegt. Hierbei wird ein orthogonaler Farbraum mit den Koordinaten L*, a* und b* aufgespannt. Die L*-Achse steht für die Helligkeit. Farben gleicher Helligkeit liegen jeweils in einer Ebene, die zu dieser Achse senkrecht ist. Der Farbort wird durch die Kordinaten a* und b* angegeben, wobei a* die Rot-Grün-Achse und b* die Blau-Gelb-Achse darstellen.

Es gibt neben der Farbempfindung noch zahlreiche andere Möglichkeiten, Fliegen anzulocken. Es ist beispielsweise bekannt, daß Zucker gerne von Fliegen gefressen wird. Da er geruchlos ist, hat er kaum Fernwirkung (C.H. Richardson, J. Econ. Entomol., 10, 102 (1917)). Bedingt durch ihren Eigengeruch haben diese Fernwirkung aber andere zuckerhaltige Stoffe, wie beispielsweise Melasse, Sirup, Honig oder Malz (C. Künast, C. Günzrodt, Schädlingskunde, Pflanzenschutz, Umweltschutz 54, 135-138 (1981)). Eine andere wichtige Gruppe von Insektenlockstoffen sind die Pheromone, von denen beispielsweise das 9-cis-Tricosen oder "Muscalure" genannt sein soll (D.A. Carlson, Science 174, 76-78 (1971)). Auch visuelle Reizwirkungen sind bekannt, von denen die Fähigkeit zur Erkennung und Auswahl geometrischer Formen, insbesondere von Oberflächenstrukturen, erwähnt werden soll (K. Arevad, Ent. exp. & appl. 8, 175-188 (1965)).

Es gibt also zahlreiche Reize, die Fliegen anzulocken vermögen. Aber keiner davon reicht allein aus, um in einer natürlichen Umgebung praktisch wirksam zu sein.

In jüngerer Zeit wird erstmals die spektrale Verteilung des Gesichtsfeldes durch die Angabe von Farbkoordinaten definiert. So werden in EP-A-O 229 191 Gelb-Orange-Nuancen (Farbart im JIS-Z-8721 Standard: 2,5 R bis 2,5 YR, Helligkeit >4 und Sättigung >6) und in JA-A-56 11 57 06 Gelbnuancen (5 YR bis 7,5 YG) mit einer Helligkeit >7 und einer Sättigung >8 als Köderfarbe für Musca domestica beschrieben In diesen Arbeiten wird ausdrücklich erwähnt, daß außerhalb dieser Grenzen keine Wirksamkeit beobachtet wird Qualitativ ist diese Feststellung in der älteren Literatur mehrfach vorhanden, so schon bei P.R. Awati, Indian J. Med. Res. Sec. D, 16, 553-9 (1920). Allerdings wird in EP-A-O 229 191 darauf hingewiesen, daß auch der bevorzugte Nuancen-Bereich nicht ausreicht, um allein durch die Farbempfindung eine zufriedenstellende Lockwirkung hervorzurufen, weshalb dort vorgeschlagen wird, zusätzlich Pheromone zuzusetzen. Die Gleichzeitigkeit eines bestimmten optischen und physiologischen Reizes soll die Lockwirkung hervorbringen.

Aufgrund der zum Teil widersprüchlichen Aussagen der Literatur konnte nicht auf einen in bezug auf Köderwirkung und insektizide Effizienz optimalen Köder für Stubenfliegen geschlossen werden.

Es besteht somit weiterhin die Aufgabe, einen in bezug auf Köderwirkung und insektizide Effizienz optimalen Köder für Stubenfliegen zu schaffen.

Die Aufgabe wird dadurch gelöst, daß die Lockfarbe eine Rottönung mit im Cielab-System (nach DIN 6174) gemessenen Farborten mit den Werten L* = 36-45, a* = 20-55 und b* = 0-25 aufweist.

Die Konzentration des Farbstoffs liegt zwischen 0,01 % und 15 %, vorzugsweise zwischen 0,02 und 4 %, und ist in weiten Grenzen variierbar.

Die Konstitution der Farbstoffe ist im wesentlichen ohne Bedeutung, jedoch sind aus Gründen der Verarbeitung und Handhabung saure Farbstoffe und von ihnen die Klasse der Direktfarbstoffe bevorzugt.

Es können die Rottöne allein oder in Kombination mit anderen Farben und Formen angewendet werden. Bevorzugt ist die Kombination der erfindungsgemäßen Rottöne mit Schwarz.

Die Ködersubstanz besteht aus einem Gemisch von Fraßstimulans und Insektizid, gegebenenfalls unter Beimischung von Hilfs- und/oder Trägersubstanzen.

Als Fraßstimulanzien kommen vorzugsweise Zucker und zuckerhaltige Produkte in Frage, wobei auch Gemische eingesetzt werden können. Als derartige Substanzen seien beispielsweise genannt: Saccharose, z.B. in Form von Puderzucker, Malzpulver, Malzextrakt, Honig, Dextrin. Zur Erhöhung der Fernattraktivität können gegebenenfalls weitere auf Fliegen anziehend wirkende Stoffe zugesetzt werden, wie z.B. Skatol, Milchsäure.

Bei der Herstellung der insektiziden Ködersubstanz wird vorzugsweise ein Gemisch aus Fraßstimulans, wie z.B. Puderzucker, Dextrin usw., mit dem Insektizid und mit Wasser versetzt; anschließend gibt man dann gegebenenfalls eine weitere fraßstimulierende Komponente, wie z.B. Malzextrakt, Malzpulver oder Waldhonig, gegebenenfalls unter Zusatz von die Fernattraktivität erhöhenden Substanzen und gegebenenfalls unter Zusatz üblicher Formulierhilfsmittel zu. Die Mischungsverhältnisse der eingehenden Komponenten können in größeren Bereichen variiert werden. Vorzugsweise sind 1 bis 90, insbesondere 5 bis 20, Gew.-% Insektizid in der Köderformulierung enthalten.

Diese Köderformulierungen werden in bekannter Weise hergestellt, z.B. durch Vermischen der Wirkstoffgemische mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glykol, sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser.

Es können in den Formulierungen Haftmittel, wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Ferrocyanblau und organische Farbstoffe, wie Alizarin-, Azo- und Metallphthalocyaninfarbstoffe, verwendet werden.

Als insektizide Wirkstoffe können im Prinzip alle bekannten und/oder handelsüblichen Insektizide eingesetzt werden. Beispielhaft seien aufgeführt: Propoxur, Carbofuran, Bendiocarb, Methamyl, Pyrethrine natürlicher Herkunft, Pyrethroide wie Tetramethrin, Permethrin, Fenfluthrin, Decamethrin, Cyfluthrin; weiterhin Plifenate, DDVP. Besonders bevorzugt werden Phosphorsäureester, wie z.B. Fenthion, Merpafol, Fenitrothion oder Methamidophos eingesetzt.

Während die Wirkung von Oberflächenstrukturen mehrfach untersucht wurde (z.B. K. Arevad; Ent. exp. & appl. 8, 175-188 (1965)), ist über den Einfluß der geometrischen Form eines Köders auf dessen Lockwirkung für Musca domestica bisher nichts bekannt.

Es wurde nun überraschend gefunden, daß Köder aus eckigen Körpern, z.B. Prismen, Quader, Würfel, wirksamer sind als solche aus rotationssymmetrischen Körpern, z.B. Zylindern.

Bevorzugt besteht der Köder daher aus eckigen Körpern, besonders bevorzugt aus Quadern oder würfelähnlichen Körpern.

Die Abmessungen des Köders sollten der Größe des Raumes im Verhältnis angepaßt sein.

Für übliche Wohnräume haben sich Köder mit einer Seitenlänge von 3 bis 30 cm, insbesondere 5 bis 15 cm, als gut geeignet erwiesen.

Es ist weiterhin überraschend, daß eine deutliche Wirkungssteigerung erreicht wird, wenn der Köderkörper an seiner Oberseite offen ist.

Ein weiteres Merkmal der Formgebung betrifft die Anordnung des Lockstoffs. Es hat sich überraschenderweise gezeigt, daß es besonders vorteilhaft ist, die Ködersubstanz auf der Innenwandung, insbesondere auf der oberen Innenseite, des Hohlkörpers aufzubringen.

Dies hat neben einer verbesserten Wirksamkeit auch hygienische Vorteile, weil zum einen das Insektizid nicht mit den Händen, beispielsweise beim Aufstellen oder Entsorgen des Köders, berührt werden muß; zum anderen, weil ein Teil der getöteten Fliegen in das Innere des Behälters fällt und dadurch nur in geringer Zahl in dessen Umgebung herumliegen. Der Anwender kommt also mit den Händen nur mit der köder-, lockstoff- und insektizidfreien Außenseite des Fliegenköderkörpers in Kontakt.

Vorzugsweise ist der Köder durch einen Hohlkörper aus einem faltbaren Zuschnitt gekennzeichnet.

Es versteht sich, daß dieser Zuschnitt Klebelaschen, vorzugsweise selbstklebende, oder Stecklaschen aufweist, damit er in die Gebrauchsform gebracht werden kann. Ein solcher faltbarer Zuschnitt hat den Vorteil, daß für Transport und Lagerung wenig Platz benötigt wird. Für diesen Zweck läßt sich der Zuschnitt entsprechend falten und auch flach auf das kleinstmögliche Format zusammenlegen. Um ein eventuelles Verkleben der mit Ködersubstanz beschichteten Flächen zu vermeiden, legt man Papier bzw. Folie zwischen, welche beim Zusammensetzen des Köders entfernt werden. Als solche Zwischenlage eignet sich eine Kunststoff-Folie oder Wachspapier oder mit Polyisobutylen beschichtetes Papier.

Gemäß einer besonders vorteilhaften Ausführungsform ist der Hohlkörper mit schwarzen Streifen versehen. Es kann sich dabei um Längs- und/oder Querstreifen handeln. Die schwarzen Streifen werden entweder auf der roten Hintergrundfarbe bzw. auf den Hohlkörper aufgeklebt oder bereits auf das Material für die Herstellung des Köders aufgedruckt.

Bei oben offenem Hohlkörper sind die schwarzen Streifen vorzugsweise auf der Innenwandung angeordnet. Sie können auch außen und innen vorgesehen sein.

Es hat sich in der Wirksamkeit als besonders vorteilhaft erwiesen, die Ködersubstanz auf den schwarzen Streifen anzuordnen.

Dies hat auch den Vorteil, daß man mit weniger Substanz auskommt, und daß man bei aufgeklebten schwarzen Streifen dieses Streifenmaterial mit der Ködersubstanz tränken kann. Eine Beschichtung ist aber ebensogut möglich.

In der Zeichnung ist der neue Köder in einem Ausführungsbeispiel rein schematisch dargestellt und nachstehend näher erläutert. Es zeigen:

Fig. 1       den Köder in räumlicher Darstellung und

Fig. 2       einen Zuschnitt für den Köder gemäß Fig. 1 mit Blick auf die spätere Innenwandung.

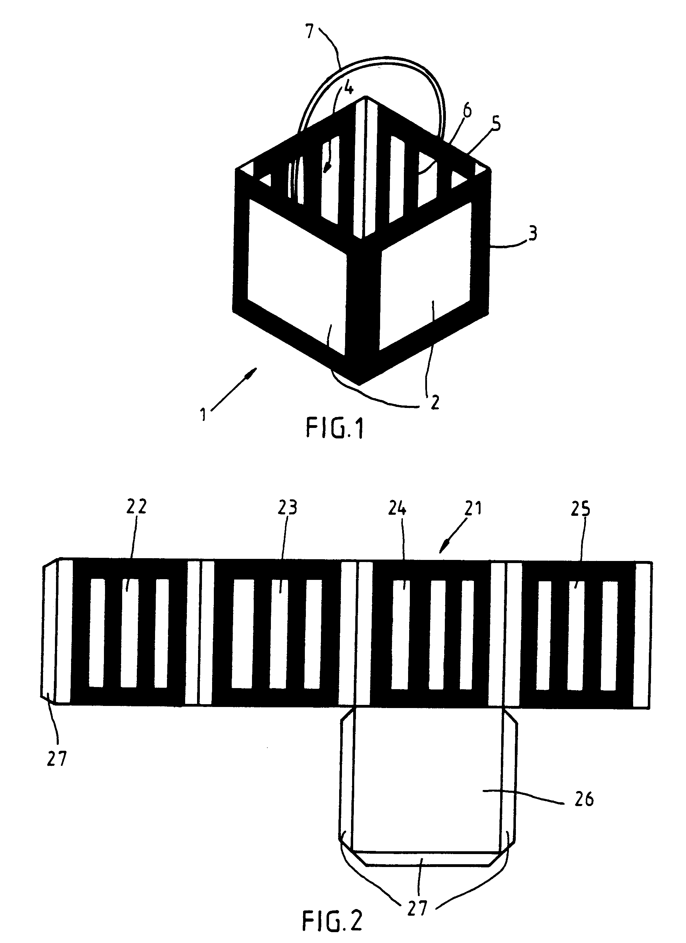

In Fig. 1 besteht der Köder aus einem oben offenen Hohlkörper 1 aus Karton und besitzt Würfelform von 8 cm Seitenlänge. Dieses Kartonmaterial weist als Lockfarbe eine Rottönung mit im Cielab-System gemessenen Farborten mit den Werten $L^* = 40$, $a^* = 35$ und $b^* = 12$ auf. Die Seitenflächen 2 sind mit aufgeklebten schwarzen Streifen 3 von 6 mm Breite eingerahmt. Auch die Innenwandung 4 ist oben mit einem schwarzen, in den Ecken jedoch unterbrochenen Randstreifen 5 versehen Zusätzlich sind auf der Innenwandung 4 noch senkrechte schwarze Streifen 6 gleicher Breite vorgesehen. Diese schwarzen Streifen 5 und 6 sind mit einer insektizidhaltigen Ködersubstanz herkömmlicher Zusammensetzung beschichtet. Der Hohlkörper 1 ist mit einem Aufhängebügel 7 versehen.

In Fig. 2 besteht der Zuschnitt 21 für den Hohlkörper 1 gemäß Fig. 1 aus fünf gleichgroßen Flächen, von denen vier die Seitenwandungen 22, 23, 24 und 25 und die fünfte den Boden 26 bilden. Die Seitenwandung 22 sowie der Boden 26 sind mit selbstklebenden Falzen 27 versehen.

Eine geeignete insektizide Köderformulierung wird wie folgt hergestellt:

Es wird 1 g Gemisch aus Puderzucker und Dextrin im Verhältnis 3,35 : 1 pro Köderkörper aufgetragen.

Als insektizide Komponente kann dieses Gemisch jeweils 10 % Fenthion, Merpatos, Folithion oder Tamaron sowie zusätzlich 1 % Propoxur enthalten. Zum Auftragen auf den Hohlkörper wird dieses Gemisch (1 g) mit 0,1 bis 0,4 ml Wasser versetzt und gerührt. Zu dem so erhaltenen Gemenge werden 200 mg Malzextrakt oder Malzpulver oder 100 mg Waldhonig gegeben. Die so erhaltene Formulierung streicht man auf die schwarzen Streifen des Köders auf.

Beispiel 1

Auf verschiedenfarbige, 13 cm hohe, aus Pappkarton bestehende, quaderförmige Köder (Faltkörper) mit einer Kantenlänge von 7 cm werden auf zwei gegenüberliegenden Seiten je fünf weiße Papierstreifen von 13 cm Länge und 0,5 cm Breite im Abstand von 1,5 cm aufgeklebt. Als Vergleichsstandard dient ein Köder (Faltkörper) mit hellblauer Untergrundfarbe. Standardköder und farbiger Probeköder werden in einem abgeschlossenen Raum (Grundfläche 5 x 3,2 m, Höhe 3 m) im Abstand von 60 cm jeweils in einem 60 x 60 cm messenden Holzrahmen aufgestellt und alle 30 Minuten die Zahl der in dem Rahmen liegenden Fliegen (Musca domestica/Stamm WHO (R)) gezählt. Hierbei wird viermal die Position der Köder vertauscht. Es werden die beim Probeköder bzw. beim Standardköder erfaßten Fliegen addiert und der Faktor wie folgt berechnet:

4

$$\text{Faktor} = \frac{\text{Anzahl der erfaßten Fliegen beim Probeköder}}{\text{Anzahl der erfaßten Fliegen beim Standardköder}}$$

Für verschiedene Farbuntergründe erhält man die folgenden Werte:

Tabelle 1

| Farbort (Cielab-System) | | | entspricht | Faktor |
|---|---|---|---|---|
| L* | a* | b* | Farbbereich | |
| 30,9 | 0,2 | -2,6 | scharz | 1,85 |
| 46,1 | 53,1 | -24,0 | violett | 1,12 |
| 55,2 | 53,6 | 20,8 | scharlach | 1,03 |
| 48,2 | -5,7 | -29,1 | dunkelblau | 0,84 |
| 45,6 | 12,2 | 15,7 | braun | 0,80 |
| 69,7 | 56,8 | 56,2 | orange | 0,86 |
| 82,9 | 11,9 | 82,2 | rosa | 0,63 |

Dieses Beispiel bestätigt, daß bunte Farben allein keine selektive Anziehungskraft besitzen.

Beispiel 2

Testobjekt ist wie im Beispiel 1 Musca domestica/Stamm WHO (N). Man verfährt wie im Beispiel 1, verwendet aber anstelle der quaderförmigen zylindrische Köder.

Auf die Hintergrundfarbe Rot (Cielab-Werte L* = 38,3; a* = 34,3; b* = 0,7) werden weiße bzw. schwarze Streifen geklebt, auf die Hintergrundfarbe schwarz (L* = 30,9; a* = 2,0; b* = -2,6) werden weiße bzw. rote Streifen geklebt. Getestet wird in einem 7 x 6 m großen und 3 m hohen Raum, in dem die Köder auf zwei Tischen im Abstand von 4 m jeweils in einem 60 x 60 cm messenden Holzrahmen stehen.

Unter Einbeziehung eines Standards (hellblau mit weißen Streifen) erhält man dann bei vergleichender Betrachtung der jeweiligen Köder folgende gemäß der Methode nach Beispiel 1 errechnete Faktoren:

Tabelle 2

Miteinander verglichene Köder                    Faktor

Schwarz mit weißen Streifen: Hellblau
mit weißen Streifen                              3,15

Schwarz mit weißen Streifen: Rot mit
weißen Streifen                                  1,17

Rot mit schwarzen Streifen : Rot mit
weißen Streifen                                  2,34

Rot mit schwarzen Streifen : Schwarz mit
weißen Streifen                                  1,93

Rot mit schwarzen Streifen : Rot ohne
Streifen                                         1,26

Rot mit schwarzen Streifen : Schwarz mit
roten Streifen                                   1,09

Dieses Beispiel zeigt, daß Rot eine attraktive Hintergrundfarbe für Fliegenköder darstellt und daß in der Kombination mit Schwarz, vorzugsweise in Form von Streifen, eine deutliche Wirkungssteigerung eintritt.

Beispiel 3

Testobjekt ist wiederum Musca domestica/Stamm WHO (N). Eingesetzt werden Köder (Faltkörper) aus Pappkarton mit der Hintergrundfarbe Rot (Cielab-Werte $L^* = 38,3$ $a^* = 34,3$; $b^* = 9,7$) mit schwarzen Streifen (Cielab-Werte $L^* = 30,9$; $a^* = 0,2$; $b^* = -2,6$). Geprüft wird wie im Beispiel 2 beschrieben. Man fertigt aus dem Material Köder mit den geometrischen Formen nach Tabelle 3. Als Standard dient ein zylinderförmiger Köder (Durchmesser 6 cm, Höhe 15 cm, ebenfalls Hintergrundfarbe Rot mit schwarzen Streifen). Ausgewertet wird - wie im Beispiel 1 beschrieben - der Faktor.

6

## Tabelle 3

| Geometrische Form | Faktor |
|---|---|
| Pyramide (15 cm hoch, Grundfläche 8 x 8 cm, pro Seite 3 schwarze Längsstreifen) | 0,58 |
| Standardzylinder (Durchmesser 6 cm, Höhe 15 cm, schwarze Längsstreifen) | 1,00 |
| Scheibe (3 cm dick, 16 cm Durchmesser, mit schwarzen konzentrischen Kontrastringen) | 1,14 |
| Quader (15 cm hoch, Grundfläche 6 x 6 cm, pro Seite 3 schwarze Längsstreifen) | 1,52 |
| Prisma (15 cm hoch, 5 schwarze Längsstreifen auf zwei Längsseiten) | 1,59 |

Dieses Beispiel zeigt, daß prismatische und quaderförmige Köder gleichgroßen zylindrischen Ködern in ihrer Wirkung auf Musca domestica überlegen sind.

Beispiel 4

Eingesetzt wird ein quaderförmiger, aus Pappkarton bestehender, oben geschlossener Köder (Faltkörper) mit den Abmessungen 6 x 6 x 15 cm mit der Hintergrundfarbe Rot (Cielab-Werte: $L^* = 38,3$; $a^* = 34,3$; $b^* = 9,7$) mit schwarzen Streifen (Cielab-Werte: $L^* = 30,9$; $a^* = 0,2$; $b^* = -2,6$). Auf den schwarzen Kontraststreifen ist eine Köderformulierung aus Insektizid, Puderzucker und Malzextrakt aufgebracht. Als Insektizid wird ein Gemisch aus Folithion (10 Gew.-%) und Propoxur (1 Gew.-%) eingesetzt.

Als Vergleich dient ein hellblaues Prisma von 8 cm Seitenlänge und 13 cm Höhe mit hellbraunen Kontraststreifen an zwei Seiten. Köder dieser Art sind handelsüblich.

Getestet wird in Räumen mit einem Grundriß von 5,22 x 2,25 m und einer Höhe von 3,18 m. Es wird weiterhin mit vier Neonröhren beleuchtet. Auf den Boden wird in einen 60 x 60 cm messenden Holzrahmen ein Köder gestellt, und zwar an den Längswänden jeweils drei Tränken mit 10 %igem Zuckerwasser auf Zellstoff. Anschließend werden 300 gemischt-geschlechtliche, drei Tage alte Stubenfliegen (Musca domestica), die einige Stunden zuvor unter $CO_2$-Anesthäsie in Becher eingezählt worden waren, freigelassen. Zu den in Tabelle 4 angegebenen Zeitpunkten werden in Rückenlage befindliche Fliegen ausgewertet und nach Abbott verrechnet (Testmethode nach Abbott), siehe Abbott, W.S.; "A method of computing the effectiveness of an insecticide"; J. econ. Entomd. 18, 265-267 (1925).

Nach 20 Stunden wird zusätzlich der optische Effekt (OE) bestimmt; d.h. der Prozentsatz der innerhalb des Holzrahmens liegenden Fliegen, bezogen die auf eingesetzte Anzahl.

Folgende Fliegenstämme werden verwendet: Musca domestica/WHO (N) (normalsensibel); Weymanns (Phosphorsäure- und Carbamat-resistent), Hans (Pyrethroid-resistent) und Kretschmer (multiresistent):

## Tabelle 4

| Fliegen-<br>stamm | erfindungsgemäßer<br>Köder<br>% Abbott nach | | | | Standard<br><br>% Abbott nach | | | |
|---|---|---|---|---|---|---|---|---|
| | 30 min | 2 h | 20 h | OE | 30 min | 2 h | 20 h | OE |
| WHO (N) | 5 | 22 | 100 | 78 | 0,5 | 3 | 64 | 36 |
| Weymanns | 7 | 37 | 91 | 30 | 5 | 16 | 60 | 36 |
| Hans | 9 | 26 | 85 | 43 | 2 | 6 | 68 | 35 |
| Kretschmer | 3 | 18 | 86 | 28 | 9 | 15 | 73 | 28 |

Der erfindungsgemäße Köder ist bei den Fliegenstämmen Musca domestica/WHO (N), Weymanns und Hans in der Sofort- und bei allen in der Endwirkung überlegen.

Der erfindungsgemäße Köder ist bei den Fliegenstämmen Musca domestica/WHO (N), Weymanns und Hans in der Sofort- und bei allen in der Endwirkung überlegen.

Der optische Effekt (OE) des erfindungsgemäßen Köders ist bei WHO (N) dem Standard deutlich überlegen, bei anderen Stämmen etwa gleich gut.

### Beispiel 5

Man verfährt wie in Beispiel 4 angegeben und vergleicht den dort beschriebenen, geschlossenen, quaderförmigen Köder mit außen aufgetragener Ködersubstanz mit einem oben offenen, quaderförmigen Köder mit den Abmessungen 8 x 8 x 9 cm mit innen an der Oberkante aufgebrachter Ködersubstanz Es wird mit den gleichen vier Fliegenstämmen wie im Beispiel 4 getestet und der Prozentsatz der jeweils verendeten Fliegen bestimmt und nach Abbott verrechnet.

Außerdem wird nach 20 Stunden der optische Effekt (OE) wie im Beispiel 4 bestimmt.

## Tabelle 5

Ergebnisse aus je zwei Versuchen ermittelt

| Fliegen-<br>stamm | offener Quader<br>% Abbott nach | | | | geschlossener Quader<br>% Abbott nach | | | |
|---|---|---|---|---|---|---|---|---|
| | 30 min | 2 h | 20 h | OE | 30 min | 2 h | 20 h | OE |
| WHO (N) | 2 | 8 | 89 | 81 | 3 | 7 | 82 | 72 |
| Weymanns | 26 | 62 | 99 | 52 | 17 | 44 | 100 | 45 |
| Hans | 13 | 40 | 97 | 65 | 15 | 35 | 98 | 54 |
| Kretschmer | 17 | 29 | 95 | 65 | 11 | 21 | 90 | 53 |

Von den nach 20 Stunden im Rahmen befindlichen Fliegen befinden sich im Inneren des Quaders folgende Prozentanteile: 66, 64, 62 und 71.

Beispiel 6

Man verfährt wie in Beispiel 2 beschrieben und stellt einen Vergleich zwischen den in Beispiel 5 beschriebenen Ködern an sowie einen Vergleich zwischen einem offenen Quader (8 x 8 x 9 cm) und einem offenen Würfel (8 x 8 x 8 cm).

Tabelle 6

| Köder | Faktor |
|---|---|
| offener Quader (8 x 8 x 9 cm): | |
| geschlossener Quader (8 x 8 x 9 cm) | 1,80 |
| offener Würfel (8 x 8 x 8 cm): | |
| offener Quader (8 x 8 x 9 cm) | 1,39 |

Zeile 1 der Tabelle 6 unterstreicht die Ergebnisse aus Tabelle 5, diesmal in direktem Vergleich der beiden Köder.

Zeile 2 der Tabelle 6 zeigt, daß ein offener Würfel nochmal attraktiver ist als ein offener Quader.

**Patentansprüche**

1. Köder für Stubenfliegen (Musca domestica), bestehend aus einem mit einer insektizidhaltigen Ködersubstanz versehenen Körper (1) in einer roten Lockfarbe, dadurch gekennzeichnet, daß die Lockfarbe eine Rottönung mit im Cielab-System (nach DIN 6174) gemessenen Farborten mit den Werten $L^* = 36$ bis 45, $a^* = 20$ bis 55 und $b^* = 0$ bis 25 aufweist.

2. Köder nach Anspruch 1, gekennzeichnet durch einen Hohlkörper (1) aus einem faltbaren Zuschnitt (21).

3. Köder nach Anspruch 2, dadurch gekennzeichnet, daß der Hohlkörper (1) oben offen ist.

4. Köder nach Anspruch 1, 2 oder 3, dadurch gekennzeichnet, daß die Konzentration des Farbstoffes im Ködermaterial 0,01 bis 15 Gew.-% beträgt.

5. Köder nach Anspruch 4, dadurch gekennzeichnet, daß die Konzentration des Farbstoffes im Ködermaterial 0,02 bis 4 Gew.-% beträgt.

6. Köder nach einem der Ansprüche 1 bis 5, dadurch gekennzeichnet, daß die Lockfarbe sauren Direktfarbstoff aufweist.

7. Köder nach einem der Ansprüche 1 bis 6, dadurch gekennzeichnet, daß der Hohlkörper (1) mit schwarzen Streifen (3, 5, 6) versehen ist.

8. Köder nach einem der Ansprüche 1 bis 7, dadurch gekennzeichnet, daß der Hohlkörper (1) eckige Form besitzt.

9. Köder nach einem der Ansprüche 1 bis 8, dadurch gekennzeichnet, daß schwarze Streifen (5, 6) auf der Innenwandung (4) des Hohlkörpers (1) angeordnet sind.

10. Köder nach einem der Ansprüche 1 bis 9, dadurch gekennzeichnet, daß die Ködersubstanz auf der Innenwandung (4) des Hohlkörpers (1) angeordnet ist.

## Claims

1. Bait for houseflies (Musca domestica), consisting of a body (1) in a red colour for luring treated with an attractant containing an insecticide, characterised in that the luring colour has a red shade with colour locations measured in the Cielab-System (according to DIN 6174) having the values L* = 36 to 45, a* = 20 to 55 and b* = 0 to 25.

2. Bait according to Claim 1, characterised by a hollow body (1) cut out to be foldable (21).

3. Bait according to Claim 2, characterised in that the hollow body (1) is open at the top.

4. Bait according to Claim 1, 2 or 3, characterised in that the concentration of the dye in the bait material is from 0.01 to 15% by weight.

5. Bait according to Claim 4, characterised in that the concentration of the dye in the bait material is from 0.02 to 4% by weight.

6. Bait according to one of the Claims 1 to 5, characterised in that the colouring matter used as lure contains acid direct dye.

7. Bait according to one of the Claims 1 to 6, characterised in that the hollow body (1) has black stripes (3, 5, 6).

8. Bait according to one of the Claims 1 to 7, characterised in that the hollow body (1) has an angular shape.

9. Bait according to one of the Claims 1 to 8, characterised in that black stripes (5,6) are arranged on the internal wall (4) of the hollow body (1).

10. Bait according to one of the Claims 1 to 9, characterised in that the bait substance is arranged on the internal wall (4) of the hollow body (1).

## Revendications

1. Appât pour mouches domestiques (Musca domestica), constitué d'un corps (1) de couleur attractive rouge, muni d'une substance servant d'appât et contenant un insecticide, caractérisé en ce que la couleur attractive présente une nuance rouge avec des lieux de couleur, mesurés dans le système Cielab (d'après la nomre DIN 6174) ayant les valeurs L* = 36 à 45, a* = 20 à 55 et b*= 0 à 25.

2. Appât suivant la revendication 1, caractérisé par un corps creux (1) formé d'une pièce découpée (21) pliable.

3. Appât suivant la revendication 2, caractérisé en ce que le corps creux (1) est ouvert à la partie supérieure.

4. Appât suivant la revendication 1, 2 ou 3, caractérisé en ce que la concentration du colorant dans la matière servant d'appât est de 0,01 à 15 % en poids.

5. Appât suivant la revendication 4, caractérisé en ce que la concentration du colorant dans la matière servant d'appât est de 0,02 à 4 % en poids.

6. Appât suivant l'une des revendications 1 à 5, caractérisé en ce que la couleur attractive présente un colorant direct acide.

7. Appât suivant l'une des revendications 1 à 6, caractérisé en ce que le corps creux (1) est pourvu de bandes noires (3, 5, 6).

8. Appât suivant l'une des revendications 1 à 7, caractérisé en ce que le corps creux (1) est de forme anguleuse.

9. Appât suivant l'une des revendications 1 à 8, caractérisé en ce que des bandes noires (5, 6) sont disposées sur la paroi intérieure (4) du corps creux (1).

10. Appât suivant l'une des revendications 1 à 9, caractérisé en ce que la substance servant d'appât est disposée sur la paroi intérieure (4) du corps creux (1).

FIG.1

FIG.2